# EUROPÄISCHE PATENTSCHRIFT

(11) **EP 1 695 074 B1**
(45) Veröffentlichungstag und Bekanntmachung des Hinweises auf die Patenterteilung: **16.01.2008**
(21) Anmeldenummer: 03788791.6
(22) Anmeldetag: 13.11.2003
(51) Int. Cl.: G01N 29/02, G01N 27/00

(54) **ERFASSEN EINES UMWELTEINFLUSSES DURCH ÄNDERUNG DER LEITFÄHIGKEIT DER SENSORSCHICHT EINES PIEZOELEKTRISCHEN SENSORS**
Detection of an environmental parameter by a conductivity change of a sensor coating of a piezoelectric sensor
Détection d'un paramètre d'environnement par un changement de conductivité d'un revêtement d'un capteur piezoélectrique

(43) Veröffentlichungstag der Anmeldung: 30.08.2006
(73) Patentinhaber: Technische Universität Clausthal, 38678 Clausthal-Zellerfeld (DE); PSFU Profilschleif-, Fertigungs- und Umwelttechnik GmbH, 38855 Wernigerode (DE)
(72) Erfinder: FRITZE, Holger, 38855 Wernigerode (DE); TULLER, Harry, L., Wellesley, MA 02181 (US)
(74) Vertreter: Taruttis, Stefan Georg
(86) Internationale Anmeldenummer: PCT/DE2003/003774
(87) Internationale Veröffentlichungsnummer: WO 2005/052570

(56) Entgegenhaltungen:
- EP-A- 0 416 160
- WO-A-97/45723
- US-B1- 6 370 955
- ALTINDAL A ET AL: "Soluble dodecylsulfanylphthalocyanines as sensitive coatings for chemical sensors in gas phase" FREQUENCY CONTROL SYMPOSIUM, 1998. PROCEEDINGS OF THE 1998 IEEE INTERNATIONAL PASADENA, CA, USA 27-29 MAY 1998, NEW YORK, NY, USA,IEEE, US, 27. Mai 1998 (1998-05-27), Seiten 676-684, XP010305603 ISBN: 0-7803-4373-5
- LEE Y ET AL: "The quartz crystal resonator as detector of electrical loading: an analysis of sensing mechanisms" FREQUENCY CONTROL SYMPOSIUM, 1996. 50TH., PROCEEDINGS OF THE 1996 IEEE INTERNATIONAL. HONOLULU, HI, USA 5-7 JUNE 1996, NEW YORK, NY, USA,IEEE, US, 5. Juni 1996 (1996-06-05), Seiten 577-585, XP010199944 ISBN: 0-7803-3309-8
- H. FRITZE, O. SCHNEIDER, H.SEH, H.L. TULLER, G. BORCHARDT: "High temperature bulk acoustic wave properties of langasite" PHYS. CHEM. CHEM. PHYS., Nr. 5, 19. September 2003 (2003-09-19), Seiten 5207-5214, XP002292349

## Beschreibung

Die Erfindung betrifft ein Verfahren und eine Vorrichtung zum Erfassen eines Umwelteinflusses auf einen Sensor mittels einer Änderung einer elektrischen Leitfähigkeit einer Sensorschicht des Sensors, sowie eine

Anordnung zum Erfassen eines Umwelteinflusses auf Sensoren durch Erfassen einer Änderung der elektrischen Leitfähigkeit einer Sensorschicht der Sensoren, sowie eine

Sensoreinrichtung zum Erfassen eines Umwelteinflusses mittels einer Änderung einer elektrischen Leitfähigkeit einer Sensorschicht des Sensors und durch Erfassen einer im Volumen eingebauten oder oberflächlichen Ablagerung und/oder der Wechselwirkung eines Umweltmaterials oder einer zu messenden Substanz auf demselben Sensor.

Verschiedene Umwelteinflüsse, wie z.B. Gase, Teilchen oder Lichtstrahlen, erweisen sich heutzutage für Menschen als gefährlich, obwohl sie nur in einer geringen Dosis vorhanden sind, z.B. bei biologischen oder chemischen Herstellungsprozessen, sowie in bestimmten Lebens- und Arbeitsumgebungen.

Unterschiedliche Arten von Sensoren wurden entwickelt, um diese Umwelteinflüsse zu messen, wobei diese zur Messung elektrische, optische, akustische und elektrochemische Effekte verwenden. Die Messergebnisse können zur Überwachung und Regelung von Maschinen und Prozessen eingesetzt werden, beispielsweise Messergebnisse von Gassensoren, Temperatur- oder chemischen Sensoren zur Führung eines chemischen Prozesses.

Da die nachzuweisenden Umwelteinflüsse häufig nur ein geringes Ausmaß aufweisen, z.B. eine Strahlung von geringer Leistung oder nur geringe Mengen einer chemischen Substanz, war es erforderlich, sehr empfindliche Sensoren zu entwickeln, um diese zu erfassen.

Als besonders nützlich haben sich dafür Sensoren erwiesen, die ein piezoelektrisches Material aufweisen. Mit derartigen Sensoren ist es möglich, bspw. einen Umwelteinfluß wie die reversible oder irreversible Ein- oder Anlagerung von Gasen oder Teilchen, in oder auf der Sensorschicht zu erfassen. Ein adsorbiertes Gas führt zur Masseänderung des Sensors, beispielsweise als ein Film auf dem Sensor, wodurch sich seine Schwingungsfrequenzen ändern. Die Frequenzänderungen erwiesen sich als direkt abhängig von der Menge des absorbierten Gases.

Aus der US 2003/0076743 A1 ist ein Sensor mit einem piezoelektrischen Material bekannt, auf dem zwei verschieden große Anregungselektroden angeordnet sind, durch die das piezoelektrische Material zu Schwingungen angeregt wird. Der Sensor wird in einen Elektrolyten getaucht, um die Eigenschaften des Elektrolyten zu untersuchen, wobei der Elektrolyt direkt auf die Anregungselektrode wirkt.
Bei derartigen Messungen bleiben die Elektrodenflächen während einer Messung konstant. Ein weiterer Nachteil ist, dass die Messungen von Eigenschaften eines Elektrolyten mit einem derartigen Sensor auf den Bereich der Raumtemperatur begrenzt ist. Ferner ist nachteilig, dass das Elektrolyt unmittelbar auf die Anregungselektrode einwirkt, und diese dadurch Änderungen erfährt.

Aus der US 6,370,955 B1 ist eine Hochtemperaturwaage mit einem piezoelektrischen Material, wie z.B. Langasit, bekannt. Die Frequenzverschiebung der Waage wird beobachtet, um eine Änderung durch auf der Waage abgelagertes Material in einer Hochtemperaturumgebung zu bestimmen.
Nachteilig bei dieser Waage ist, dass nur die Menge des abgelegten Materials meßbar ist.

Aus der WO 97/45723 ist ein piezoelektrischer Resonator bekannt, auf dem verschieden große Anregungselektroden angeordnet sind, um den Resonator zu Schwingungen anzuregen. Dabei kann eine der Elektroden von einer Polymerschicht bedeckt sein. Der Resonator wird in eine organische Lösung eingebracht, um darin chemische Stoffe zu detektieren, wobei eine Veränderung der Leitfähigkeit der Polymerschicht und damit von mindestens einer Resonanz- und mindestens einer Anti-Resonanzfrequenz des Resonators ausgenutzt wird. Nachteilig bei einem derartigen Sensor ist, daß dieser nur für den Raumtemperaturbereich ausgelegt ist. Ein weiterer Nachteil ist, daß Polymerschichten verwendet werden, so daß nur eine eingeschränkte Bandbreite von Umwelteinflüssen berücksichtigt werden kann. Ferner ist nachteilig, daß mindestens eine Resonanz- und mindestens eine Anti-Resonanzfrequenz bestimmt werden müssen, um die Art bzw. das Ausmaß des Umwelteinflusses zu bestimmen, wodurch erhebliche meßtechnische Aufbauten und Rechenkapazitäten erforderlich sind.

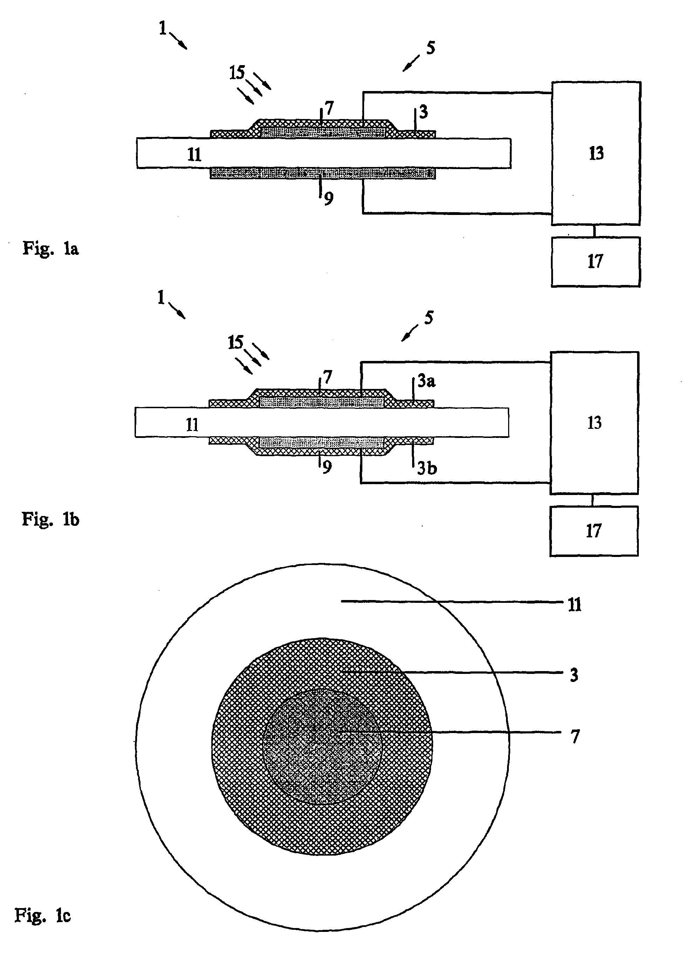

Altindal et al. ("Soluble dodecylsulfanylphthalocyanines as sensitive coatings for chemical sensors in gas phase", IEEE INTERNATIONAL FREQUENCY CONTROL SYMPOSIUM, 676 - 684 (1998)) offenbart in Figur 1 einen Sensor, bei dem an gegenüberliegenden Seiten eines piezoelektrischen Materials angeordnete Anregungselektroden eine unterschiedliche Fläche aufweisen. Die Anregungselektrode mit der kleineren Fläche ist mit einer Sensorschicht aus einem spezifischen organischen Polymer überdeckt, das sich auch auf das angrenzende piezoelektrische Material erstreckt. Das Meßverfahren beruht auf der Bestimmung der Anti-Resonanzfrequenz, auch Parallelresonanzfrequenz genannt. Die Messung der Resonanzfrequenz erfolgt hingegen nur, um den reinen Masse-Effekt, der auf resorbiertes Gas zurückgeht, entsprechend einer Quarzkristall-Mikrowaage auzunützen. Die eingesetzte Sensorschicht aus einem organischen Polymer, dem Halbleitereigenschaften zugeschrieben werden, kann nur zu Kapazitätsänderungen führen, die über die Messung der Anti-Resonanzfrequenz bestimmbar ist, wie dies auch durchgängig beschrieben ist.

Y. Lee et al. ("The quartz crystal resonator as detector of electrical loading: an analysis of sensing mechanisms", IEEE INTERNATIONAL FREQUENCY CONTROL SYMPOSIUM, 577 - 585 (1996)) beschreibt einen Resonator, der ohne Sensorschicht auf einer der Anregungselektroden auskommt. Als Wechselwirkung dieses Resonators mit dem Medium wird dessen elastische Kopplung mit der Oberfläche des Resonators erwähnt, sowie die Veränderung der Vibrationsamplitude des Resonators durch Veränderungen der elektrischen Leitfähigkeit des umgebenden Mediums. Dabei wird davon ausgegangen, dass die dielektrischen Eigenschaften des angrenzenden Mediums für die Messung entscheidend sind, die daher durch die Bestimmung der Anti-Resonanzfrequenz des Resonators zu messen sind. In Übereinstimmung mit der Bedeutung der Kapazitätsänderung, entsprechend der Messung der Anti-Resonanzfrequenz, die als Maß für den Umwelteinfluß gemessen werden sollen, werden auch die Änderungen des Randfeldes im Detail analysiert.

Aufgabe der Erfindung ist es daher, die Selektivität und Sensitivität von Sensoren zu verbessern, sowie ein vereinfachtes Meßverfahren bereitzustellen.

Diese Aufgabe wird erfindungsgemäß gelöst durch eine Vorrichtung zum Erfassen eines Umwelteinflusses auf einen Sensor mittels einer Änderung einer elektrischen Leitfähigkeit einer Sensorschicht des Sensors gemäß Anspruch 1 sowie durch ein entsprechendes Verfahren gemäß Anspruch 16.

Vorteilhafte Ausgestaltungen sind in den Unteransprüchen aufgezeigt.

Die nachfolgende Beschreibung der generellen Funktionsweise der Sensorschicht und der Erzeugung von Resonanzfrequenzen sowie der zu verwendenden Materialien bezieht sich jeweils auf alle dargestellten Ausführungsformen der Erfindung.

Die erfindungsgemäße Vorrichtung gemäß Anspruch 1 und das erfindungsgemäße Verfahren gemäß Anspruch 16 zum Erfassen eines Umwelteinflusses auf einen Sensor mittels einer Änderung einer elektrischen Leitfähigkeit einer Sensorschicht des Sensors zeichnen sich gegenüber dem Stand der Technik dadurch aus, daß nur die Resonanzfrequenz eines

Grundtones bestimmt werden muß, um die Art und das Ausmaß eines Umwelteinflusses auf den Sensor zu bestimmen. Ferner ist es möglich, durch Wahl geeigneter piezoelektrischer Materialien (z.B. Langasit), einen großen Temperaturbereich abzudecken, d.h. von -60 °C bis 1000 °C, bevorzugt von -30 °C oder 0 °C bis 900 °C oder bis 600 °C, 500 °C, 250 °C oder 100 °C, solange das Material keinen Phasenübergang in diesem Bereich zeigt. Daher sind auch Temperaturen von bis zu -200 °C mit den erfindungsgemäßen Sensoren messbar bzw. die Sensoren sind in den genannten Temperaturbereichen einsetzbar.

Ferner ist die Sensorschicht nicht auf ein bestimmtes Material beschränkt, sondern kann durch alle Materialien gebildet sein, die ihre Leitfähigkeit aufgrund eines zu bestimmenden Umwelteinflusses ändern.

Bei der vorteilhaften Ausgestaltung nach Anspruch 22 werden zwei baugleiche Vorrichtungen gemäß Anspruch 1 (oder einem der Ansprüche 1 bis 15) dem gleichen Umwelteinfluß ausgesetzt, wobei jedoch nur die erste Vorrichtung Daten liefert, die die Art oder das Ausmaß des Umwelteinflusses widerspiegeln und die zweite Vorrichtung von diesem Umwelteinfluß unberührt bleibt. Vergleicht man nun die Resonanzfrequenzen der Grundtöne miteinander, so spiegelt sich in der Resonanzfrequenz der ersten Vorrichtung die Auswirkung des Umwelteinflusses (z.B. veränderter Sauerstoff-Partialdruck) und geänderte Umweltbedingungen (z.B. auf 900 °C erhöhte Temperatur) wider, wohingegen sich in der Resonanzfrequenz des Grundtones der zweiten Vorrichtung nur die Änderung der zu messenden Umweltbedingung (d.h. die erhöhte Raumtemperatur von 600°C) widerspiegelt. Der Umwelteinfluß ist somit in dieser Schrift die mit Hilfe des Sensors zu messende Größe. Unter Umweltbedingung sind in dieser Schrift die allgemeinen physikalischen, chemischen oder biologischen Bedingungen zu verstehen, denen der Sensor ausgesetzt ist, die evtl. auch das Frequenzverhalten des Sensors ändern können. Bei der erfindungsgemäßen Messanordnung werden die Umweltbedingungen als Referenzwert gemessen und bei der Messung des interessierenden Umwelteinflusses eliminiert. Auf diese Weise ist es sehr einfach möglich, die Auswirkung des Umwelteinflusses auf die Resonanzfrequenz des Grundtones herauszufinden, ohne zuvor Standard- bzw. Referenzmessungen für den Sensor durchführen zu müssen. Die erfindungsgemäße Anordnung steht somit selbst bei vorher nicht vermessenen Umwelteinflüssen und Umweltbedingungen sofort zu einer Messung bereit und muß nicht mit einer Referenzkurve abgeglichen werden, um die Art oder das Ausmaß des Umwelteinflusses bestimmen zu können. Ferner können auf diese Weise beispielsweise auch mechanische Spannungen im Sensorelement, die durch Temperaturänderungen in zwei Sensorvorrichtungen auftreten, von dem gewünschten Signal getrennt werden, das sich aufgrund des Umwelteinflusses ergibt.

Die vorteilhafte Ausgestaltung nach Anspruch 27 zeichnet sich dadurch aus, daß sie zum einen einen Sensor umfaßt, wie er in den Ansprüchen 1 bis 15 definiert ist, so daß die Änderung der Leitfähigkeit einer Sensorschicht des Sensors erfaßbar ist, um die Art oder das Ausmaß eines Umwelteinflusses auf den Sensor zu bestimmen. Der Sensor dieser Ausführungsform weist noch eine dritte Anregungselektrode auf, mit deren Hilfe es möglich ist, mit demselben Sensor auch die Menge des auf dem Sensor abgelagerten Materials zu bestimmen. Auf diese Weise dient diese erfindungsgemäße Sensoreinrichtung zum einen als Sensor zur Erfassung einer Änderung der Leitfähigkeit der Sensorschicht und zum anderen zur Erfassung der auf dem Sensor ab- oder eingelagerten Menge eines Materials.

Für die erfindungsgemäße Vorrichtung, das Verfahren, die Anordnung und die Sensoreinrichtung gilt das folgende:

Als Anregungseinheit kann vorteilhaft eine Oszillatorschaltung verwendet werden, wodurch die Messung des Umwelteinflusses kostengünstiger ist, oder es kann bevorzugt ein Netzwerkanalysator verwendet werden, der das gesamte Resonanzspektrum des piezoelektrischen Materials aufzeichnet, wodurch zum Beispiel auch Resonanzfrequenzen von anderen Obertönen, oder auch die Dämpfung der Resonanz zur Verfügung stehen, um beispielsweise mit Hilfe der Obertöne eine einfacherere Temperaturkompensation durchzuführen oder mit Hilfe der Dämpfung die Viskosität eines auf dem Sensor abgelagerten Materials zu bestimmen.

Von der Anregungseinheit werden vorteilhafterweise periodisch verlaufende Signale, insbesondere Rechteck-, Sinus- oder Dreiecksignale, erzeugt, die anschließend dem piezoelektrischen Material zugeführt werden.

Die Anregungselektroden können aus einem Metall, z.B. Gold oder Aluminium (vorzugsweise bei niedrigeren Temperaturen), einer nichtoxidischen Keramik, z.B. TiN, einer Oxidkeramik, z.B. La_{0.3}Sr_{0.7}CrO₃ oder Edelmetallen, z.B. Pt, Pt-Rh-Legierungen, (für höhere Temperaturen bevorzugt) gebildet sein.

Die Anregungselektroden liegen vorteilhaft unmittelbar an dem piezoelektrischen Material an. Es können jedoch auch Schichten eines Isolationsmaterials und/oder Haftschichten zwischen der Anregungselektrode und dem piezoelektrischen Material angeordnet sein, um beispielsweise eine chemische Reaktion der beiden Materialien miteinander zu verhindern.

Bevorzugt liegt die erste Anregungselektrode mit einer Fläche an dem piezoelektrischen Material an, die größer oder kleiner ist als die Fläche, mit der die zweite Anregungselektrode an dem piezoelektrischen Material anliegt. Wählt man diese Variante, so kann für die Anordnung gemäß Anspruch 22 eine Sensorschicht gewählt werden, die für beide Sensoren baugleich ist, jedoch bei einem ersten Sensor auf der größeren Anregungselektrode angeordnet ist und genauso groß wie diese Anregungselektrode ist, und bei einem zweiten Sensor auf der kleineren Anregungselektrode angeordnet ist, so daß die Sensorschicht die kleinere Elektrode vollständig bedeckt und auch noch unmittelbar an einem Bereich des piezoelektrischen Materials anliegt. Auf diese Weise kann erreicht werden, daß beide Sensoren ihr Frequenzverhalten aufgrund von allgemeinen Umweltbedingungen ändern, jedoch nur der zweite Sensor sein Frequenzverhalten aufgrund des zu messenden Umwelteinflusses ändert. Denn die wirksame Elektrodenfläche bei dem zweiten Sensor wird durch den Umwelteinfluß vergrößert. Bei dieser erfindungsgemäßen Elektrode wird das piezoelektrische Material durch die an dem piezoelektrischen Material anliegende Elektrodenfläche und auch durch die Sensorschicht angeregt, da diese letztere aufgrund des Umwelteinflusses eine gesteigerte Leitfähigkeit aufweist und sich somit das an der Anregungselektrode anliegende Potential auf die Sensorschicht erstreckt. In der Folge ergibt sich auch in diesem Bereich der Sensorschicht eine Anregung des piezoelektrischen Materials. Mit anderen Worten führt der Umwelteinfluß zu einer gesteigerten Leitfähigkeit der Sensorschicht, wodurch auch in der Sensorschicht das Potential der Anregungseinheit anliegt und dadurch das piezoelektrische Material auch durch die Sensorschicht zu Schwingungen angeregt wird.

Die Umkehrung des Prozesses, d.h. die Verringerung der Leitfähigkeit der Sensorschicht und daher die Verringerung der wirksamen Elektrodenfläche der Anregungselektrode kann entsprechend zur Messung verwendet werden, beispielsweise bei Desorption eines Stoffes von der Sensorschicht.
Vorteilhafterweise liegen die Anregungselektrode(n) mit einer kreisförmigen Fläche an dem piezoelektrischen Material an, so dass eine besonders einfache Herstellung des Sensors möglich ist.

Ferner können die erste Anregungselektrode und die zweite Anregungselektrode die gleiche Geometrie mit jeweils zusätzlichen elektrischen Anschlüssen aufweisen, so daß sich keine unterschiedlichen Anregungen des piezoelektrischen Materials aufgrund von Geometrieeffekten ergeben. Die Anregungselektroden sind besonders bevorzugt baugleich gestaltet, so daß sich Effekte aufgrund von unterschiedlichen Geometrien, Materialien, usw. nicht ergeben.

In einer weiteren Ausführungsform ist der Sensor ein Resonator mit beidseitig angeordneten Anregungselektroden, die jeweils mit Sensorschichten überzogen sind. Dabei ist es auch möglich, die Sensorschichten aus verschiedenen Materialien und/oder mit unterschiedlicher Geometrie auszubilden. In Figur 1b ist ein solcher Sensor schematisch dargestellt, die unterschiedlichen Sensorschichten sind als 3a und 3b bezeichnet.

In weiteren Ausführungsformen der Erfindung kann die Fläche der Sensorschicht verändert werden, um durch die Geometrieänderung, beispielsweise als Ringelement oder Kreissegment, einen Bereich einer Sensorschicht zu bilden, der auf die gegenüberliegende Anregungselektrode abgestimmt ist. Durch diese willkürliche Änderung der effektiven Anregungsfläche kann eine Resonanzfrequenzänderung hervorgerufen werden. Auf eine andere Weise können Resonanzfrequenzänderungen durch Variation des Materials der Sensorschicht, vollständig oder nur abschnittsweise, erzielt werden. Diese Maßnahmen dienen der Anpassung des Sensors an bestimmte Umweltbedingungen bzw. der Erzeugung eines deutlichen Meßsignales für den zu messenden Umwelteinfluß. Als Beispiel kann durch diese Variationen der Fläche oder des Materiales der Sensorschicht eine Frequenzverschiebung eingestellt werden, die auf bestimmte zu messende Temperaturbereiche oder Sauerstoff-Partialdrucke angepasst ist.

Der Resonator kann aus jedem beliebigen piezoelektrischen Material gebildet sein. Bevorzugt ist das piezoelektrische Material jedoch Quarz, ein Material der Struktur Ca₃Ga₂Ge₄O₁₄ (Langasit und dessen isomorphe Verbindungen), ein Material des Systems (Al, Ga)N oder Galliumorthophosphat, so daß der Sensor, die Anordnung und auch die Sensoreinrichtung in den erfindungsgemäß bevorzugten hohen Temperaturbereichen funktionsfähig sind.

Das piezoelektrische Material kann prinzipiell in jeder geometrischen Form vorliegen. Aufgrund der Herstellungsverfahren und/oder der Meßverfahren ist jedoch oder die Form eines Zylinders bevorzugt.

Die Sensorschicht liegt bevorzugt unmittelbar an der mindestens einen Anregungselektrode und/oder dem piezoelektrischen Material an.

Die Frequenzmesseinrichtung kann ein Frequenzzähler oder ein Netzwerkanalysator oder Impedanzspektrometer sein.

Vorteilhafterweise ist durch die Frequenzmesseinrichtung neben der Resonanzfrequenz des Grundtones noch mindestens eine Resonanzfrequenz von Obertönen und/oder eine Dämpfung der Resonanz des Grundtones oder des Obertones meßbar, so dass diese für eine weitere Auswertung zur Verfügung stehen. Beispielsweise kann mit Hilfe der Resonanzfrequenzen der Obertöne eine Temperaturkompensation erfolgen (z.B. wie in Phys. Chem. Chem. Phys, 2003: "High temperature bulk acoustic wave properties of langasite" von H. Fritze, O. Schneider, H. Seh, H. L. Tuller und G. Borchardt beschrieben). Des weiteren kann die Dämpfung der Resonanz dazu verwendet werden, um die mechanischen Eigenschaften, beispielsweise die Viskosität, von auf dem Sensor abgelagerten Materialien oder von der Sensorschicht selbst zu bestimmen. Die Resonanzfrequenzen der Obertöne können ebenfalls dazu verwendet werden, die Art oder das Ausmaß des Umwelteinflusses zu bestimmen.

Als Umwelteinfluß kommt grundsätzlich jede Art von äußerer Einwirkung auf die Sensorschicht in Betracht. Eine Grenze ergibt sich lediglich dadurch, auch ein Material für die Sensorschicht zu finden, das auf den Umwelteinfluß mit einer Änderung seiner elektrischen Leitfähigkeit reagiert:

Als Materialien für die Sensorschicht kommen Oxidkeramiken, nicht-oxidische Keramiken, Halbleiter und organische synthetische oder natürliche Polymeren in Betracht, insbesondere ZnO, ZnS, TiO2, Se, CeO₂ sowie Oxide von Übergangsmetallen, beispielsweise Kupfer und Eisen sowie Proteine oder Nukleinsäuren. Der Fachmann kann das geeignete Material für die Sensorschicht danach auswählen, wie es die elektrische Leitfähigkeit in Abhängigkeit von dem zu messenden Umwelteinfluß verändert.

Für die Messung von energiereicher Strahlung, wie Photonen, Teilchenstrahlen, radioaktive Strahlen, Elektronenstrahlen und/oder Röntgenstrahlen als Umwelteinfluß, so besteht das Material der Sensorschicht beispielsweise aus Zinkoxid. Durch den Einfall von Photonen werden Elektronen in das Leitungsband von Zinkoxid gehoben, so daß dieses eine erhöhte Leitfähigkeit aufweist. Anstelle von Halbleitern können auch organische Verbindungen verwendet werden.

Zur Messung einer chemischen oder biologischen Substanz auf der Sensorschicht (3) als ein Umwelteinfluß ist für die Sensorschicht ein Material zu verwenden, das seine Leitfähigkeit ändert, wenn die Substanz mit dem Material der Sensorschicht in Kontakt gerät. Diese Wechselwirkung der Substanz mit dem Sensormaterial führt zu einer Änderung der Beweglichkeit und/oder der Dichte der Ladungsträger in oder an der Oberfläche des Sensormateriales.

Zur Messung einer Temperaturänderung ist ein Material zu verwenden, das seine Leitfähigkeit ändert, wenn es erwärmt bzw. abgekühlt wird. Für diesen Zweck kommen insbesondere Halbleiter oder Keramiken in Betracht.

Um eine Temperaturkompensation von gemessenen Frequenzen vorzunehmen, gibt es im wesentlichen drei Möglichkeiten. Als erste Möglichkeit können piezoelektrische Materialien verwendet werden, die einen temperaturkompensierten Schnitt aufweisen. Als zweite Möglichkeit kann die Temperatur im Bereich des Meßsensors durch Thermometer oder optische Mittel gemessen werden, und nachfolgend die Frequenzverschiebung aufgrund der erhöhten Temperatur durch "Herausrechnen" abgezogen werden, beispielsweise mit Hilfe des Temperaturkoeffizienten. Drittens kann neben der Resonanzfrequenz des Grundtones des piezoelektrischen Materials auch mindestens eine Resonanzfrequenz eines Obertones bestimmt werden, und mit Hilfe dieser beiden Resonanzfrequenzen ein temperaturkompensierter Frequenzwert berechnet werden (wie z.B. gemäß Phys. Chem. Chem. Phys, 2003: "High temperature bulk acoustic wave properties of langasite" von H. Fritze, O. Schneider, H. Seh, H.L. Tuller und G. Borchardt).

In einer Ausführungsform der Erfindung werden zwei Sensorelemente verwendet, die in einer gemeinsamen Anordnung betrieben werden. Die erfindungsgemäße Anordnung nach einem der Ansprüche 22 bis 27 umfaßt vorteilhaft zwei mit Ausnahme der Position und Größe der Sensorschicht baugleiche Vorrichtungen nach einem der Ansprüche 1 bis 15, so daß Effekte durch Verwendung von unterschiedlichen piezoelektrischen Materialien, unterschiedlichen Anregungselektroden, unterschiedlichen Sensorschichtmaterialien usw. keinen Einfluß auf das Messergebnis haben. Durch den nominell bis auf die Sensorschichtposition identischen Aufbau werden die Einflüsse der Umweltbedingungen eliminiert, so dass die erwünschte Meßgröße für den Umwelteinfluß herausgehoben wird.

Ferner werden die piezoelektrischen Materialien vorteilhaft von derselben Anregungseinheit zu Schwingungen angeregt und die Schwingungen des piezoelektrischen Materials werden vorteilhaft von demselben Frequenzzähler gezählt. Allgemein ist es somit vorteilhaft, daß die Elemente der Anordnung (nach einem der Ansprüche 22 bis 26), die nicht in jeder der beiden Vorrichtungen (nach einem der Ansprüche 1 bis 15) vorhanden sein müssen, gemeinsam verwendet werden, wodurch sich überdies ein einfacherer Aufbau und eine Kostenersparnis ergibt.

Die Sensoreinrichtung nach einem der Ansprüche 27 bis 31 kann zylindersymmetrisch um eine Symmetrieachse aufgebaut sein. Dabei hat das piezoelektrische Material die Form eines Zylinders, eine erste und zweite Anregungselektrode haben die Form einer Kreisscheibe, wobei deren Mittelpunkte derselben auf der Symmetrieachse liegen, und die dritte Anregungselektrode hat die Form eines Kreisringes, dessen Kreismittelpunkt ebenfalls auf der gemeinsamen Symmetrieachse liegt, und die Sensorschicht hat die Form einer Kreisscheibe und liegt unmittelbar auf der ersten Anregungselektrode, wobei auch deren Mittelpunkt auf der gemeinsamen Symmetrieachse liegt.

Bevorzugt liegt auch hier (wie bei der Vorrichtung nach einem der Ansprüche 1 bis 15) die Sensorschicht unmittelbar an der Anregungselektrode an und die Anregungselektroden liegen unmittelbar an dem piezoelektrischen Material an.

Die Erfindung wird folgend unter Bezug auf eine Zeichnung beschrieben, wobei
- Fig. 1 a: eine schematische Ansicht einer erfindungsgemäßen Vorrichtung zum Erfassen eines Umwelteinflusses auf einen Sensor mittels einer Änderung einer elektrischen Leitfähigkeit einer Sensorschicht des Sensors zeigt,
- Fig. 1b: eine weitere Ausführungsform des erfindungsgemäßen Sensors im Schnitt zeigt,
- Fig. 1c: eine Draufsicht auf den Sensor der Fig. 1 zeigt,
- Fig. 2a: einen Funktionsplot zeigt, der eine berechnete Frequenzverschiebung aufgrund einer vergrößerten wirksamen Elektrodenfläche darstellt,
- Fig. 2b: eine erste Messung mit der erfindungsgemäßen Vorrichtung der Fig. 1 zeigt,
- Fig. 2c: die Messung der Fig. 2b mit einer verbesserten Temperaturkompensation zeigt,
- Fig. 3: eine schematische Ansicht der Anordnung zum Erfassen eines Umwelteinflusses auf Sensoren durch Erfassen einer Änderung einer elektrischen Leitfähigkeit von einer Sensorschicht der Sensoren zeigt, und
- Fig. 4: eine schematische Querschnittsansicht einer erfindungsgemäßen Sensoreinrichtung zeigt.

Grundsätzlich sind verschiedene Ausführungsformen der Erfindung möglich. Im folgenden werden bevorzugte Ausführungsformen der Erfindung beschrieben.

Fig. 1 zeigt eine Anregungseinheit 13 zum Erzeugen elektrischer Potentiale, einen Sensor 5 und eine Frequenzmesseinrichtung 17.

Die Anregungseinheit 13 ist vorliegend durch eine Oszillatorschaltung gebildet.
Der Sensor 5 besteht aus einer ersten 7 und einer zweiten 9 Anregungselektrode, die jeweils unmittelbar auf einer Seite eines piezoelektrischen Materials 11 angeordnet sind. Auf der ersten 7 und zweiten 9 Anregungselektrode ist unmittelbar eine Sensorschicht 3 aufgebracht, die auf beiden Anregungselektroden 7, 9 identisch ist, d.h. aus demselben Material besteht, den gleichen Durchmesser und Dicke aufweist und somit auch die gleiche Masse aufweist.

Die Frequenzmesseinrichtung 17 ist vorliegend ein Frequenzzähler.

Erzeugt die Anregungseinheit 13 oszillierende Potentiale, so liegen diese über die erste 7 und zweite 9 Anregungselektrode an dem piezoelektrischen Material 11 an, das dadurch zu Schwingungen angeregt wird. Das piezoelektrische Material schwingt mit einer Resonanzfrequenz des Grundtones sowie weiteren Resonanzfrequenzen von z.B. einem ersten, dritten, fünften und siebten Oberton. Die Frequenz der Schwingungen des piezoelektrischen Materials 11 ist mittels der Frequenzmesseinrichtung 17 zu messen.

Eine Draufsicht auf den Sensor 5 der Fig. 1 ist in Fig. 1c gezeigt. Die Anregungselektroden 7, 9 und das piezoelektrische Material 11 sind hier konzentrisch angeordnet.

Die Leitfähigkeit der Sensorschicht 3 ist durch Umwelteinflüsse variierbar. Wird der Sensor 5 einem Umwelteinfluß ausgesetzt, so verändert sich die Leitfähigkeit der Sensorschicht 3. Wird die Leitfähigkeit größer, so wird das an der ersten Anregungselektrode 7 anliegende Potential im gesamten Bereich der Sensorschicht 3 wirksam, da diese elektrisch leitend miteinander verbunden sind. Das piezoelektrische Material 11 wird somit unmittelbar durch die erste Anregungselektrode 7 sowie durch einen Bereich der nunmehr elektrisch leitfähigeren Sensorschicht 3 angeregt, wodurch sich die "wirksame Elektrodenfläche" um den Bereich der nunmehr leitenden Sensorschicht erhöht. Liegt im Ausgangszustand eine leitfähige Sensorschicht vor, so kann durch einen zu messenden Umwelteinfluß die Leitfähigkeit verringert und damit die wirksame Elektrodenfläche verkleinert werden. Als Folge der Änderung der wirksamen Elektrodenfläche verändert sich die Resonanzfrequenz.

Folgende Überlegungen legen die Größe der Anregungselektroden 7, 9 fest:
Um ein hinreichend großes Volumen des piezoelektrischen Materials 11 anzuregen, liegt die zweite Anregungselektrode 9 mit einer Fläche an einer Seite des piezoelektrischen Materials 11 an, die der Größe dieser Seite des piezoelektrischen Materials 11 nahekommt.
Somit liegt die Obergrenze der wirksamen Elektrodenfläche der Sensorschicht 3 als die Fläche fest, mit der die Anregungselektrode 9 an dem piezoelektrischen Material 11 anliegt: Falls die Sensorschicht 3 hinreichende Leitfähigkeit erreicht und diese mindestens so groß ist, wie die Elektrode 9, dann sind die wirksamen Elektrodenflächen der ersten Anregungselektrode 7 und die an dem piezoelektrischen Material 11 anliegende Fläche der zweiten Anregungselektrode 9 gleich. Die Leitfähigkeit hat dann eine maximale Wirkung, wie der Fachmann mit einfachen Versuchen ermitteln kann, wenn der gesamte Bereich unterhalb der Sensorschicht zum Schwingen angeregt wird.

Damit mit dem Sensor 5 Meßdaten über einen weiten Meßbereich aufgenommen werden können, muß die an dem piezoelektrischen Material 11 anliegende Fläche der Sensorschicht 3 hinreichend groß sein. Sie darf jedoch nicht so klein sein, daß kein hinreichend großer flächiger Kontakt zwischen der ersten Anregungselektrode 7 und der Sensorschicht 3 mehr zustande kommt.

Als Vorraussetzung für eine erfindungsgemäßen Sensor, der nur die Änderung der Leitfähigkeit der Sensorschicht misst, ist die Fläche, mit der die erste Anregungselektrode 7 an dem piezoelektrischen Material 11 anliegt, immer kleiner als die Fläche, mit der die zweite Anregungselektrode 9 an dem piezoelektrischen Material 11 anliegt.

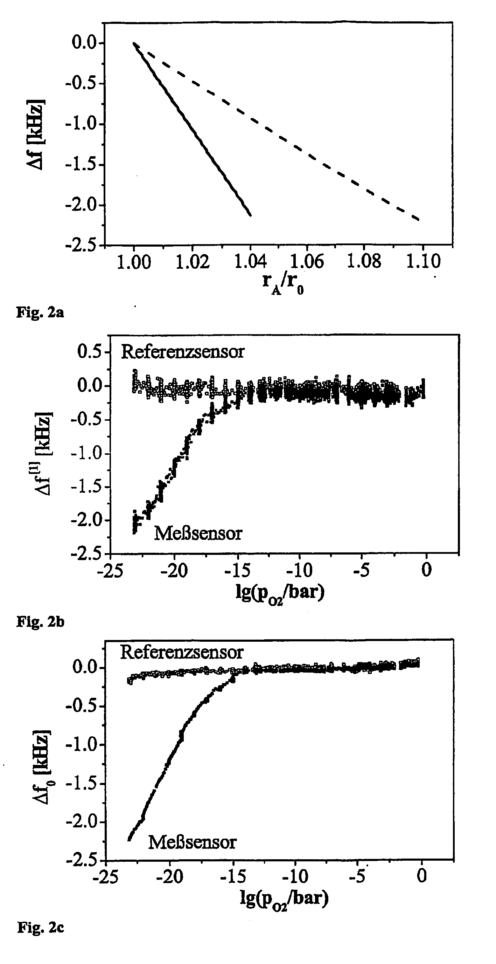

Der zuvor beschriebene Effekt der Vergrößerung der wirksamen Elektrodenfläche führt zu der in Fig. 2a gezeigten Frequenzverschiebung des nun größeren schwingenden Bereich des piezoelektrischen Materials 11. In Fig. 2a ist die berechnete Frequenzverschiebung (auf der y-Achse) gegenüber einer im Ausgangszustand auf Eins normierten, vergrößerten wirksamen Elektrodenfläche aufgetragen. Die durchgezogene Linie berücksichtigt dabei keine Randfelder, die wiederum bei Berechnung der gestrichelten Linie in einem bestimmten Ausmaß angenommen wurden. Die Randfelder sind für den Effekt, der für die erfindungsgemäße Messung verwendet wird, keine Notwendigkeit, beeinflussen ihn jedoch.

Aus einer (im Experiment beobachteten) Frequenzverschiebung der Resonanzfrequenz eines Grundtones läßt sich somit das Ausmaß oder die Art des Umwelteinflusses erfassen, da die Frequenzverschiebung direkt mit dem Ausmaß des Umwelteinflusses korreliert und die Frequenzverschiebung nur bei einem zu messenden bestimmten Umwelteinfluß oder der besonderen Art des Umwelteinflusses auftritt.

### Beispiel für eine Meßanordnung:

Als piezoelektrisches Material 11 wurde ein Langasit-Resonator verwendet und die Anregungselektroden bestehen aus Platin. Der Durchmesser der Anregungselektrode 7 beträgt ca. 4 mm und der Durchmesser der zweiten Anregungselektrode 9 beträgt ca. 9 mm. Die Sensorschicht 3 besteht aus TiO₂ und weist einen Durchmesser von 7 mm auf.

Als das piezoelektrische Material bei ca. 590°C betrieben wurde, verursachte ein Abfall des Sauerstoff-Partialdruckes p_{O2} einen Anstieg der TiO₂ - Leitfähigkeit. Da der Bereich der TiO₂ - Sensorschicht 3 größer war als die erste Anregungselektrode 7 aus Platin, bewirkte ein Anstieg der TiO₂ - Leitfähigkeit einen Vergrößerung der wirksamen Elektrodenfläche.

In Fig. 2b ist die in diesem Experiment gemessene Verschiebung der Resonanzfrequenz des Grundtones mit gefüllten Symbolen dargestellt. Auf der Y-Achse ist die gemessene Frequenzverschiebung aufgetragen und auf der X-Achse der Sauerstoff-Partialdruck in logarithmischer Skala. Wie aus der Figur 2b ersichtlich ist, ergibt sich besonders bei sehr niedrigem Sauerstoff-Partialdruck eine deutliche Änderung der Resonanzfrequenz des Grundtones.

Ebenso zeigt Fig. 2b ist mit offenen Messpunkten das Verhalten eines baugleichen Referenzsensors. Wie sich aus der Fig. 2b ergibt, zeigt dieser bei fallendem Sauerstoff-Partialdruck kaum eine Änderung der Resonanzfrequenz.

Eine Temperaturkompensation der gemessenen Frequenzwerte kann wie folgt erfolgen: Die vorherrschende Temperatur im Bereich des Sensors 5 wird bspw. mittels eines Thermometers oder durch optische Verfahren gemessen. Aus der gemessenen Temperatur läßt sich der Effekt, der sich durch die Erhöhung der Temperatur ergibt, errechnen und dieser kann folgend von dem gemessenen Frequenzwert abgezogen werden. Auf diese Weise ergibt sich ein Wert für die Resonanzfrequenz des Grundtones, der von der Temperatur unabhängig ist und nur vom Sauerstoff-Partialdruck abhängt, wodurch die gemessene Resonanzfrequenz des Grundtones temperaturkompensiert ist

Ist die gemessene Funktion einmal bekannt, so kann man bei vorgegebener Frequenzverschiebung sofort den zugehörigen Sauerstoff-Partialdruck herleiten.

In der obigen Beschreibung wurde als Anregungseinheit 13 ein Netzwerkanalysator verwendet, und das gesamte Frequenzspektrum des piezoelektrischen Materials 11 aufgezeichnet. Alternativ kann eine Oszillatorschaltung eingesetzt werden.

Erweitert man die Messung jedoch um die Resonanzfrequenz des Grundtones und die Resonanzfrequenz des z.B. dritten Obertones, so kann man eine Temperaturkompensation der gemessenen Daten bei hohen Temperaturen durchführen, wie z.B. in Phys. Chem. Chem. Phys, 2003: "High temperature bulk acoustic wave properties of langasite" von H. Fritze, O. Schneider, H. Seh, H.L. Tuller und G. Borchardt offenbart.

Figur 2c zeigt eine verbesserte Temperaturkompensation für dieselben Rohdaten, die auch in Fig. 2b verwendet wurden. Wie bereits aus Fig. 2b ersichtlich, ergibt die Veränderung der Leitfähigkeit ein starkes Signal. Der Verlauf der Messung des Referenzsensors ist wiederum mit offenen Punkten dargestellt, wobei das Messsignal bei kleinem Sauerstoff-Partialdruck eher absinkt, während das von Fig. 2b eher ansteigt. Dieser Effekt beruht darauf, daß die Temperaturkompensation das Vorzeichen eines dominierenden Masseeinflusses umdreht. (Siehe auch: Phys. Chem. Chem. Phys, 2003: "High temperature bulk acoustic wave properties of langasite" von H. Fritze, O. Schneider, H. Seh, H.L. Tuller und G. Borchardt).

Wie bereits oberhalb beschrieben läßt sich somit das erfindungsgemäße Verfahren zum Erfassen eines Umwelteinflusses 15 auf einen Sensor durch Erfassen einer Änderung der elektrischen Leitfähigkeit einer Sensorschicht 3 eines Sensors 5 in folgende Schritte einteilen:
1. Erzeugen eines Grundtones in einem piezoelektrischen Material,
2. Messen der Resonanzfrequenz der Schwingungsordnung von Schritt 1,
3. Ausüben eines Umwelteinflusses (15) auf die Sensorschicht (3), wodurch die Leitfähigkeit der Sensorschicht (3) geändert wird und somit das Frequenzspektrum des piezoelektrischen Materials verändert wird,
4. Messen der Schwingungsordnung nach Ausüben des Umwelteinflusses,
5. Berechnen einer Resonanzfrequenzdifferenz, die gebildet ist aus der Differenz der Resonanzfrequenz der Schwingungsordnung von Schritt 1 und der Resonanzfrequenz der Schwingungsordnung nach Änderung des Umwelteinflusses, und
6. Korrellieren des Ausmaßes des Umwelteinflusses (15) mit der Resonanzfrequenzdifferenz.

Der Schritt des Korrelierens des Ausmaßes des Umwelteinflusses 15 mit der Resonanzfrequenzdifferenz der Schwingungsordnung kann anhand einer vorhandenen Meßkurve oder durch Berechnungen vorgenommen werden. Für ein reines Massesignal kann hierzu die Sauerbrey-Gleichung zur Auswertung für Leitfähigkeitsänderungen beispielsweise mittels Kalibrierkurven.

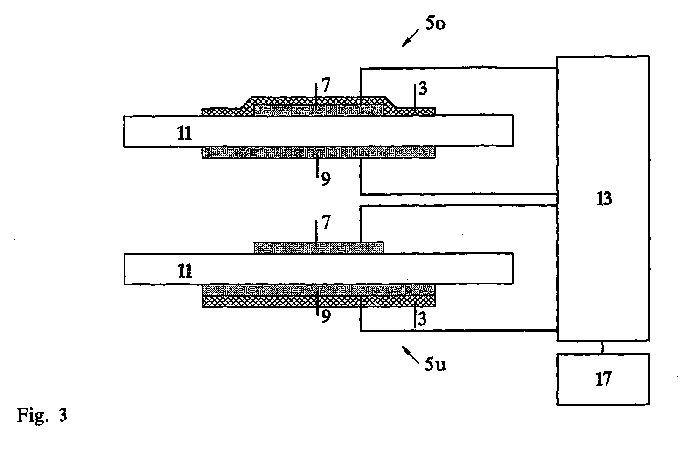

In Figur 3 ist eine erfindungsgemäße und besonders günstige Anordnung zum Erfassen eines Umwelteinflusses auf Sensoren durch Erfassen einer Änderung einer elektrischen Leitfähigkeit durch zwei Sensoren mit unterschiedlichem Aufbau dargestellt. Der Unterschied der im übrigen gleich aufgebauten Sensoren besteht darin, dass die Sensorschicht in unterschiedlicher Ausdehnung auf verschiedenen Anregungselektroden aufgebracht ist.

Die Anordnung umfaßt eine Anregungseinheit 13 zum Erzeugen elektrischer Potentiale, zwei Sensoren 5o und 5u und eine Frequenzmeßeinrichtung 17.

Das piezoelektrische Material 11 und die ersten 7 und zweiten 9 Anregungselektroden der Sensoren 5o und 5u sind jeweils baugleich, d.h. sie bestehen u. a. aus dem gleichen Material und haben hier identische räumliche Abmessungen.

Der in Fig. 3 obere Sensor 50 weist eine Sensorschicht 3 auf, die an der ersten Anregungselektrode 7 anliegt. Im Gegensatz dazu weist der in Fig. 3 untere Sensor 5u eine Sensorschicht 3 auf, die unmittelbar an der zweiten Anregungselektrode 9 anliegt.

Die beiden Sensorschichten der Fig. 3 bestehen aus demselben Material. Die Geometrie der Sensorschichten kann verändert werden, um die Antwortfunktion der Sensoren einzustellen, wie mit Bezug auf Figur 1a beschrieben ist.
Setzt man die Sensorschichten der beiden Sensoren 5o, 5u der Fig. 3 dem gleichen Umwelteinfluß aus, z.B. einer Elektrolytlösung, so wird die Leitfähigkeit der beiden Sensorschichten 3 auf gleiche Weise geändert. Dies führt bei dem oberen Sensor 5o dazu, daß sich die wirksame Elektrodenfläche verändert und sich das Frequenzspektrum des Sensors 5o verschiebt. Dies führt bei dem unteren Sensor 5u dazu, daß sich zwar die Leitfähigkeit der Sensorschicht 3 ändert, dies jedoch keinen Einfluß auf das Frequenzverhalten des Sensors 5u hat, da die Sensorschicht 3 des unteren Sensors 5u keine Berührungsfläche mit dem piezoelektrischen Material 11 hat. Die Änderung der Leitfähigkeit hat mit anderen Worten deshalb keinen Einfluß auf das Frequenzspektrum des piezoelektrischen Materials 11, weil nur die zweite Anregungselektrode 9 und die erste Anregungselektrode 7 des Sensors 5u diesen zu Schwingungen anregen.

Somit sind zwar beide Sensoren 5o, 5u denselben Umwelteinflüssen und denselben Umweltbedingungen ausgesetzt, jedoch wird allein das Frequenzspektrum des Sensors 5o durch die Umwelteinflüsse und überdies durch die Umweltbedingungen beeinflußt, während das Frequenzspektrum des Sensors 5u nur aufgrund der Umweltbedingungen geändert wird.

Der Sensor 5u ist, da er mit dem Sensor 5o mit Ausnahme der Sensorschicht baugleich ist, der geeignete Referenzsensor, um die Frequenzverschiebungen des Sensors 5o auf die Frequenzverschiebung zurückzuführen, die durch den Umwelteinfluss hervorgerufen wird. Auf diese Weise können Frequenzverschiebungen, die sich aufgrund der Umweltbedingungen ergeben, z.B. einer Temperaturänderung oder aufgrund der Masse der Sensorschicht 3, eliminiert werden.

Die in den Fig. 2b und 2c gezeigten Meßkurven wurden mit der Anordnung der Fig. 3 gemessen.

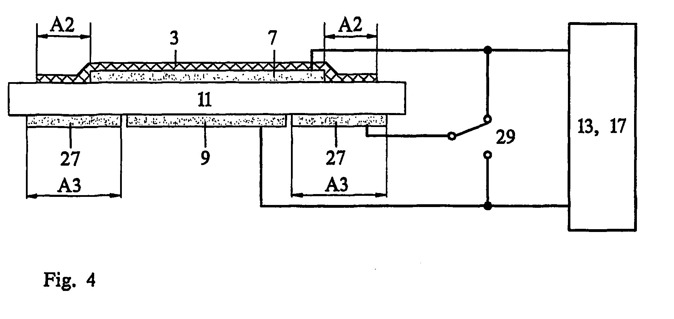

In Fig. 4 ist eine schematische Querschnittsansicht einer erfindungsgemäßen Sensoreinrichtung gezeigt. Die Sensoreinrichtung umfaßt einen Sensor mit einem Zylinder eines piezoelektrischen Materiales 11, einer ersten 7 und zweiten 9 Anregungselektrode sowie einer Sensorschicht 3, die an der ersten Anregungselektrode 7 und dem piezoelektrischen Material 11 anliegt. Die zweite Anregungselektrode erstreckt sich maximal über einen Bereich, der von der gegenüberliegenden ersten Anregungselektrode bedeckt wird. Die erste Anregungselektrode ist mit einer Sensorschicht bedeckt, die sich auch noch auf das piezoelektrische Material erstreckt. Diese Sensoreinrichtung weist ferner eine dritte Anregungselektrode 27 auf, die ebenfalls unmittelbar an dem piezoelektrischen Material 11 anliegt. Die dritte Anregungselektrode muß dabei mindestens den Bereich abdecken, der allein von der gegenüberliegenden Sensorschicht bedeckt ist. Die Anregungselektrode 27 ist hier in Form eines Kreisringes gebildet, der ebenfalls zylindersymmetrisch angeordnet ist, es sind jedoch auch andere Geometrien möglich, um das Schwingungsverhalten anzupassen.

Von den drei Anregungselektroden 7, 9, 27 gehen Leitungen 21 aus, die in einem Schaltmittel 29 zusammenlaufen. Mit Hilfe des Schaltmittels 29 können entweder die Anregungselektroden 7 und 27 elektrisch leitend miteinander verbunden werden, oder die Anregungselektroden 9 und 27.

In einer weiteren Ausführungsform kann die dritte Anregungselektrode aus mehreren separaten dritten Teilelektroden zusammenstellt sein und auf den gegenüberliegenden Flächenbereichen des Resonators jeweils gleiche oder verschiedene Sensormaterialien und/oder -geometrien angeordnet sein. In diesem Falle der Aufteilung der dritten Anregungselektrode in dritte Teilelektroden müssen die einzelnen Teilelektroden separat kontaktiert und elektrisch nach außen geführt werden, so dass ein mehrpoliges Schaltmittel eine wahlweise Zuschaltung einzelner oder mehrerer dritter Teilelektroden erlaubt. Auf diese Weise wird das gesteuerte Zuschalten von Sensorbereichen mit unterschiedlicher Funktionalität, zum Beispiel Spezifität für zu messende Umwelteinflüsse oder anderes Antwortverhalten, möglich.

Sind die Anregungselektroden 9 und 27 elektrisch leitend miteinander verbunden, so wirken diese beiden Anregungselektroden 9, 27 annähernd wie eine einzige Anregungselektrode. In diesem Fall verhält sich die Sensoreinrichtung 27 wie der zuvor beschriebene Sensor 5 gemäß Figur 1a. Mit einer derart geschalteten Sensoreinrichtung 25 lassen sich somit Umwelteinflüsse erfassen, die die Leitfähigkeit der Sensorschicht 3 beeinflussen.

Sind die Anregungselektroden 7 und 27 elektrisch leitend miteinander verbunden, so sind die Anregungselektroden so angeordnet, daß die Größe der Elektrode 9 in Figur 4 den schwingenden Bereich des piezoelektrischen Materials 11 bestimmt. Eine Ablagerung eines Materials (als Umwelteinfluß auf die Sensoreinrichtung 25) verändert das Schwingungsverhalten der Sensoreinrichtung, so daß wiederum von der Resonanzfrequenzänderung von Grundton oder Obertönen auf die Masse des an- oder abgelagerten Materials geschlossen werden kann.

Je nachdem, wie das Schaltmittel 29 geschaltet ist, dient die Sensoreinrichtung 25 als Sensor, der auf eine Änderung einer Leitfähigkeit der Sensorschicht 3 reagiert, oder als Sensor, der die auf ihm abgelagerte Masse eines Stoffes anzeigt.

Die Umschaltung zwischen diesen beiden "Sensoren" bzw. dieser beiden "Sensorfunktionen" erfolgt instantan, so daß nahezu gleichzeitig ergänzende Informationen über die Art (über die Leitfähigkeit) und das Ausmaß (über die Massenablagerung in oder an der Sensorschicht) des Umwelteinflusses zur Verfügung stehen.

Auch bei dieser Ausführungsform ist es ein Vorteil, dass mit im allgemeinen schon vorhandenen Messgeräten für resonante Sensoren, beispielsweise derartige Gassensoren, auch die Leitfähigkeit der Sensorschicht gemessen werden kann, wenn nur ein einfaches Schaltmittel zusätzlich eingesetzt wird.

Wie in dieser Schrift und bereits oben geschildert, ist die Verwendung von Quarz, von Langasit und dessen isomorphen Verbindungen, piezoelektrischen Materialien des Systems (Al, Ga)N oder von Galliumorthophosphat als piezoelektrisches Material bevorzugt, so daß das piezoelektrische Material der Vorrichtung, der Anordnung und der Sensoreinrichtung auch bei hohen Temperaturen funktionsfähig ist.

Um die Sensoreinrichtung auch bei hohen Temperaturen betreiben zu können, werden vorteilhaft auch Materialien für die Anregungselektroden 7,9, 27 verwendet, die auch im Bereich dieser hohen Temperaturen die Funktionsfähigkeit der Sensoreinrichtung 25 garantieren. Dies sind insbesondere Keramiken, nichtoxidische Keramiken, Oxidkeramiken oder Edelmetalle.

Als Anregungseinheit 13 für die Sensoreinrichtung 25 dient vorteilhaft eine Oszillatorschaltung, gegebenenfalls auch für höhere Obertöne, wodurch die Herstellung einer Meßapparatur kostengünstig gestaltet werden kann, oder bevorzugt ein Netzwerkanalysator, der das gesamte Resonanzspektrum des piezoelektrischen Materiales 11 aufzeichnet, wodurch auch weitere Resonanzfrequenzen (von Grund- oder Obertönen) zur weiteren Auswertung zur Verfügung stehen.

### Bezugszeichenliste:

- 1: Vorrichtung zum Erfassen eines Umwelteinflusses auf einen Sensor
- 3: Sensorschicht
- 3a, 3b: unterschiedliche Sensorschichten
- 5: Sensor
- 50: oberer Sensor in Figur 3
- 5u: unterer Sensor in Figur 3
- 7: erste Anregungselektrode
- 9: zweite Anregungselektrode
- 11: piezoelektrisches Material
- 13: Anregungseinheit zum Erzeugen elektrischer Potentiale
- 15: Umwelteinfluss (z.B. Photonen oder chemische Substanzen)
- 17: Frequenzmesseinrichtung
- 19: Zylinderabschnitt des piezoelektrischen Materials
- 21: Leitung
- 23: Anordnung zum Erfassen eines Umwelteinflusses auf Sensoren
- 25: Sensoreinrichtung zum Erfassen eines Umwelteinflusses
- 27: dritte Anregungselektrode
- 29: Schaltmittel

## Patentansprüche

1. Vorrichtung zum Erfassen eines Umwelteinflusses (15) auf einen Sensor (5) durch Erfassen einer Änderung einer elektrischen Leitfähigkeit einer Sensorschicht (3) des Sensors (5), wobei der Sensor (5) eine erste (7) und eine zweite (9) Anregungselektrode, ein zwischen erster (7) und zweiter (9) Anregungselektrode angeordnetes piezoelektrisches Material (11) aufweist und eine Sensorschicht (3), die mindestens bereichsweise sowohl an der ersten Anregungselektrode (7) wie auch dem piezoelektrischen Material (11) anliegt, und eine Anregungseinheit zum Erzeugen elektrischer Potentiale (13), die über die erste (7) und zweite (9) Anregungselektrode dem piezoelektrischen Material (11) zuführbar sind, so dass das piezoelektrische Material (11) durch die Anregungselektroden (7, 9) und die Sensorschicht (3) zu Schwingungen anregbar ist, sowie eine Frequenzmesseinrichtung (17), **gekennzeichnet dadurch,**
**dass** die Sensorschicht (3) aus einem Oxidkeramik-, nicht-oxidischen Keramik- oder Halbleiter-Material gebildet ist, dessen Leitfähigkeitsänderung die wirksame Elektrodenfläche um einen Bereich der Sensorschicht ändert, wobei das piezoelektrische Material (11) durch die wirksame Elektrodenfläche zu Schwingungen anregbar ist, und
**dass** mittels der Frequenzmesseinrichtung (17) die Resonanzfrequenz einer Schwingungsordnung des piezoelektrischen Materials (11) erfassbar ist.

2. Vorrichtung nach Anspruch 1 zum Erfassen eines Umwelteinflusses, **dadurch gekennzeichnet, daß** die Anregungseinheit (13) durch eine Oszillatorschaltung oder einen Netzwerkanalysator gebildet ist.

3. Vorrichtung nach Anspruch 1 oder 2, **dadurch gekennzeichnet, daß** die Anregungselektrode aus einem Metall, einer nichtoxidischen Keramik, Oxidkeramik oder einem Edelmetall gebildet ist.

4. Vorrichtung nach einem der vorangehenden Ansprüche, **dadurch gekennzeichnet, daß** die Anregungselektrode unmittelbar an dem piezoelektrischen Material anliegt.

5. Vorrichtung nach einem der vorangehenden Ansprüche, **dadurch gekennzeichnet, daß** die erste Anregungselektrode (7) mit einer Fläche an dem piezoelektrischen Material anliegt, die so groß ist wie eine Fläche, mit der die zweite Anregungselektrode (9) an dem piezoelektrischen Material anliegt.

6. Vorrichtung nach einem der vorangehenden Ansprüche, **dadurch gekennzeichnet, daß** die erste Anregungselektrode (7) mit einer Fläche an dem piezoelektrischen Material anliegt, die größer oder kleiner ist als eine Fläche, mit der die zweite Anregungselektrode (9) an dem piezoelektrischen Material anliegt.

7. Vorrichtung nach einem der vorangehenden Ansprüche, **dadurch gekennzeichnet, daß** die Anregungselektrode(n) mit einer kreisförmigen Fläche an dem piezoelektrischen Material anliegen.

8. Vorrichtung nach einem der vorangehenden Ansprüche, **dadurch gekennzeichnet, daß** die erste Anregungselektrode (7) eine gleiche Geometrie aufweist wie die zweite Anregungselektrode (9).

9. Vorrichtung nach einem der vorangehenden Ansprüche, **dadurch gekennzeichnet, daß** das piezoelektrische Material aus einem Quarz, aus Langasit, dessen isomorphen Verbindungen oder Galliumorthophosphat gebildet ist, oder ein piezoelektrisches Material ist, das auch bei Temperaturen bis 1000 °C funktionsfähig ist.

10. Vorrichtung nach einem der vorangehenden Ansprüche, **dadurch gekennzeichnet, daß** das piezoelektrische Material die Grundform eines Zylinders aufweist.

11. Vorrichtung nach einem der vorangehenden Ansprüche, **dadurch gekennzeichnet, daß** die Sensorschicht (3) unmittelbar an der Anregungselektrode und/oder dem piezoelektrischen Material anliegt.

12. Vorrichtung nach einem der vorangehenden Ansprüche, **dadurch gekennzeichnet, daß** die Sensorschicht (3) kreisförmig ausgebildet ist.

13. Vorrichtung nach einem der vorangehenden Ansprüche, **dadurch gekennzeichnet, daß** das Oxidkeramik-, nicht-oxidische Keramik- oder Halbleiter-Material ZnO, ZnS, TiO₂, Se, CeO₂, Oxide von Übergangsmetallen enthält.

14. Vorrichtung nach einem der vorangehenden Ansprüche, **dadurch gekennzeichnet, daß** sie als Frequenzmesseinrichtung (17) einen Frequenzzähler umfaßt.

15. Vorrichtung nach einem der vorangehenden Ansprüche, **dadurch gekennzeichnet, daß** mittels der Frequenzmesseinrichtung (17) die erste, dritte, fünfte oder höhere Schwingungsordnung erfassbar ist.

16. Verfahren zum Erfassen eines Umwelteinflusses (15) auf einen Sensor (5), der eine erste (7) und eine zweite (9) Anregungselektrode, ein zwischen erster (7) und zweiter (9) Anregungselektrode angeordnetes piezoelektrisches Material (11) aufweist und eine Sensorschicht (3), die mindestens bereichsweise sowohl an der ersten Anregungselektrode (7) wie auch dem piezoelektrischen Material (11) anliegt, **dadurch gekennzeichnet, dass** die Sensorschicht (3) aus einem Oxidkeramik-, nicht-oxidischen Keramik- oder Halbleiter-Material gebildet ist, dessen Leitfähigkeitsänderung die wirksame Elektrodenfläche um den Bereich der Sensorschicht ändert, durch welche das piezoelektrische Material (11) zu Schwingungen anregbar ist, das die Schritte umfasst:
1. Erzeugen eines Grundtones in dem piezoelektrischen Material (11),
2. Messen der Resonanzfrequenz der Schwingungsordnung von Schritt 1,
3. Ausüben eines Umwelteinflusses (15) auf die Sensorschicht (3), wodurch die Leitfähigkeit der Sensorschicht (3) geändert wird und die Leitfähigkeitsänderung der Sensorschicht (3) die wirksame Elektrodenfläche der ersten Anregungselektrode (7) ändert,
4. Messen der Schwingungsordnung nach Ausüben des Umwelteinflusses,
5. Berechnen einer Resonanzfrequenzdifferenz, die gebildet ist aus der Differenz der Resonanzfrequenz der Schwingungsordnung von Schritt 1 und der Resonanzfrequenz der Schwingungsordnung nach Änderung des Umwelteinflusses, und
6. Korrellieren des Ausmaßes des Umwelteinflusses (15) mit der Resonanzfrequenzdifferenz.

17. Verfahren nach Anspruch 16, **dadurch gekennzeichnet, daß** auch Obertöne in dem piezoelektrischen Material erzeugt und gemessen werden, die ebenfalls beim Erfassen der Art oder des Ausmaßes des Umwelteinflusses (15) berücksichtigt werden.

18. Verfahren nach einem der Ansprüche 16 oder 17, **dadurch gekennzeichnet, daß** die Resonanzfrequenzen der Obertöne für eine Temperaturkompensation des Schwingungsverhaltens des piezoelektrischen Materials dienen.

19. Verfahren nach einem der Ansprüche 17 bis 18, **dadurch gekennzeichnet, daß** das Ausüben eines Umwelteinflusses (15) das Bestrahlen der Sensorschicht (3) mit energiereicher Strahlung umfaßt.

20. Verfahren nach einem der Ansprüche 16 bis 19, **dadurch gekennzeichnet, daß** der Umwelteinfluß (15) die Einwirkung einer chemischen oder biologischen Substanz auf die Sensorschicht (3) ist, oder eine Temperaturänderung.

21. Verfahren nach einem der Ansprüche 16 bis 20, **dadurch gekennzeichnet, daß** durch die Anregungseinheit (13) periodisch verlaufende Signale, insbesondere Rechteck-, Sinus oder Dreiecksignale, dem piezoelektrischen Material zugeführt werden.

22. Vorrichtung mit einer Vorrichtung nach Anspruch 1, die einen ersten Sensor (50) bildet, **gekennzeichnet durch** einen zweiten Sensor (5u) zum Erfassen eines Umwelteinflusses (15), wobei
der zweite Sensor (5u) eine erste (7) und eine gegenüberliegende zweite (9) Anregungselektrode, ein zwischen diesen angeordnetes piezoelektrisches Material (11) und eine Sensorschicht (3) aufweist, die mindestens bereichsweise die zweite Anregungselektrode (9) bedeckt, diese aber nicht überschreitet, und die Sensorschicht (3) aus einem Oxidkeramik-, nicht-oxidisches Keramik- oder Halbleiter-Material gebildet ist, wobei die Sensorschicht (3) so angeordnet ist, dass das piezoelektrische Material (11) ausschließlich **durch** die Anregungselektroden (7, 9) zu Schwingungen anregbar ist, und die Resonanzfrequenz einer Schwingungsordnung des piezoelektrischen Materials **durch** eine Frequenzmesseinrichtung (17) erfaßbar ist.

23. Vorrichtung nach Anspruch 22, **dadurch gekennzeichnet, daß** das piezoelektrische Material (11) des ersten Sensors (50) mit dem des zweiten Sensors (5u) identisch ist.

24. Vorrichtung nach Anspruch 22 oder 23, **dadurch gekennzeichnet, daß** die Materialien, aus dem die Anregungselektroden des ersten und zweiten Sensors (5o, 5u) bestehen, identisch sind.

25. Vorrichtung nach einem der Ansprüche 22 bis 24, **dadurch gekennzeichnet, daß** das Material, aus dem die Sensorschicht (3) des ersten Sensors (50) gebildet ist, mit dem zweiten Material, aus dem die Sensorschicht (3) des zweiten Sensors (5u) gebildet ist, identisch ist.

26. Vorrichtung nach einem der Ansprüche 22 bis 25, **dadurch gekennzeichnet, daß** die Geometrie, in der die Sensorschicht (3) des ersten Sensors (50) geformt ist, mit der Geometrie, in der die Sensorschicht (3) des zweiten Sensors (5u) geformt ist, identisch ist.

27. Vorrichtung nach einem der Ansprüche 1 bis 12, bei der die erste Anregungselektrode (7) auf einer ersten Seite des piezoelektrischen Materials (11) und die zweite Anregungselektrode (9) auf der gegenüberliegenden zweiten Seite des piezoelektrischen Materials (11) angeordnet ist und auf der ersten Seite die Sensorschicht (3) mit einer ersten Teilfläche (A1) an der ersten Anregungselektrode (7) und einer zweiten Teilfläche (A2) an dem piezoelektrischen Material (11) anliegt,
so dass das piezoelektrische Material (11) durch elektrische Potentiale von einer Anregungseinheit zum Erzeugen elektrischer Potentiale (13) sowohl über die Anregungselektroden (7, 9) wie auch die Sensorschicht (3) zu Schwingungen anregbar ist, und die Resonanzfrequenz einer Schwingungsordnung des piezoelektrischen Materials (11) durch eine Frequenzmesseinrichtung (17) erfaßbar ist, wobei
auf der zweiten Seite des piezoelektrischen Materials eine dritte Anregungselektrode (27) angeordnet ist, die mit einer Fläche (A3) an dem piezoelektrischen Material (11) anliegt, die mindestens so groß wie die Teilfläche (A2) der Sensorschicht (3) ist und bei einer Projektion dieser Teilfläche (A2) auf die Fläche (A3) die Teilfläche (A2) vollständig von der Fläche (A3) überdeckt ist, und die erste (7), zweite (9) und dritte Anregungselektrode (27) elektrisch mit einem Schaltmittel (29) verbunden werden können, das in einer ersten Schaltstellung die zweite (9) und dritte Anregungselektrode (27) elektrisch leitend verbinden kann, so daß die Leitfähigkeit der Sensorschicht (3) erfaßbar ist, und das Schaltmittel (29) in einer zweiten Schaltstellung die erste (7) und dritte Anregungselektrode (27) elektrisch leitend verbinden kann, so daß die Veränderung der Schwingungseigenschaften durch An- oder Ablagerung von Substanz des Umwelteinflusses messbar ist.

28. Vorrichtung nach Anspruch 27, **dadurch gekennzeichnet, daß** die erste Anregungselektrode (7) in Form einer Kreisscheibe auf einer Seite des piezoelektrischen Materials gebildet ist.

29. Vorrichtung nach Anspruch 27 oder 28, **dadurch gekennzeichnet, daß** die zweite Anregungselektrode (9) in Form einer Kreisscheibe gebildet ist und die dritte Anregungselektrode (27) in Form eines Kreisringes (31) gebildet ist.

30. Vorrichtung nach Anspruch 27, **dadurch gekennzeichnet, daß** die Sensorschicht (3) unmittelbar an der ersten Anregungselektrode anliegt und kreisförmig ist.

31. Vorrichtung nach einem der Ansprüche 27 bis 30, **dadurch gekennzeichnet, daß** das piezoelektrische Material in Form eines Zylinders (19) gebildet ist, wobei die erste, zweite und dritte Anregungselektrode (27) sowie das piezoelektrische Material und das piezoelektrische Material eine gemeinsame Symmetrieachse aufweisen.

## Claims

1. Device for the determination of an environmental influence (15) onto a sensor (5) by detection of a change of an electric conductivity of a sensor layer (3) of sensor (5), wherein the sensor (5) comprises a first (7) and a second (9) excitation electrode, a piezoelectric material (11) arranged between first (7) and second (9) excitation electrodes, and a sensor layer (3) which at least in sections lies against both the first excitation electrode (7) and the piezoelectric material (11), and an excitation unit for the generation of electrical potentials (13) which are conveyable to the piezoelectric material (11) via the first (7) and the second (9) excitation electrodes so that the piezoelectric material (11) is excitable to vibrations by the excitation electrodes (7, 9) and the sensor layer (3), as well as a frequency measurement device (17), **characterised in that** the sensor layer (3) is made of an oxide ceramic, non oxide ceramic or a semiconductor material, the conductivity change thereof modifying the effective electrode surface by a region of the sensor layer, wherein the piezoelectric material (11) is excitable to vibrations by the effective electrode surface, and
**in that** the resonance frequency of a vibration order of the piezoelectric material (11) is detectable by means of the frequency measurement device (17).

2. Device according to claim 1 for the determination of an environmental influence, **characterized in that** the excitation unit (13) is formed by an oscillator circuit or a network analyser.

3. Device according to claim 1 or 2, **characterized in that** the excitation electrode is made of a metal, a non oxide ceramic, an oxide ceramic or a precious metal.

4. Device according to one of the preceding claims, **characterized in that** the excitation electrode directly lies against the piezoelectric material.

5. Device according to one of the preceding claims, **characterized in that** the first excitation electrode (7) with a surface lies against the piezoelectric material, which is as large as a surface with which the second excitation electrode (9) lies against the piezoelectric material.

6. Device according to one of the preceding claims, **characterized in that** the first excitation electrode (7) with a surface lies against the piezoelectric material, which surface is larger or smaller than a surface with which the second excitation electrode (9) lies against the piezoelectric material.

7. Device according to one of the preceding claims, **characterized in that** the excitation electrode(s) lie(s) against the piezoelectric material with a circular surface.

8. Device according to one of the preceding claims, **characterized in that** the first excitation electrode (7) shows a geometry equal to the second excitation electrode (9).

9. Device according to one of the preceding claims, **characterized in that** the piezoelectric material is of quartz, langasite, isomorphous compounds thereof or gallium orthophosphate or is a piezoelectric material also operative at temperatures up to 1000°C.

10. Device according to one of the preceding claims, **characterized in that** the piezoelectric material shows the basic form of a cylinder.

11. Device according to one of the preceding claims, **characterized in that** the sensor layer (3) lies directly against the excitation electrode and/or the piezoelectric material.

12. Device according to one of the preceding claims, **characterized in that** the sensor layer (3) is circularly formed.

13. Device according to one of the preceding claims, **characterized in that** the oxide ceramic, the non oxide ceramic or the semiconductor comprises ZnO, ZnS, TiO₂, Se, CeO₂ oxides of transition metals.

14. Device according to one of the preceding claims, **characterized in that** it comprises a frequency counter as frequency measurement device (17).

15. Device according to one of the preceding claims, **characterized in that** the first, the third, the fifth or higher vibration order is detectable by means of the frequency measurement device (17).

16. Method for the determination of an environmental influence (15) onto a sensor (5) having a first (7) and a second (9) excitation electrode, a piezoelectric material (11) arranged between the first (7) and the second (9) excitation electrode, and a sensor layer (3) which at least in sections lies against both the first excitation electrode (7) and the piezoelectric material (11), **characterized in that** the sensor layer (3) is made of an oxide ceramic, non oxide ceramic or semiconductor material, the conductivity change thereof modifying the effective surface of the electrode by a region of the sensor layer through which surface the piezoelectric material (11) is excitable to vibrations, the method comprising the steps:
1. generation of a fundamental tone in the piezoelectric material (11),
2. measurement of the resonance frequency of the vibration order of step 1,
3. exertion of an environmental influence (15) onto the sensor layer (3) whereby the conductibility of the sensor layer (3) is changed and the conductibility change of the sensor layer (3) changes the effective electrode surface of the first excitation electrode (7),
4. measurement of the vibration order after exertion of the environmental influence,
5. calculation of a resonance frequency difference formed by the difference between the resonance frequency of the vibration order in step 1 and the resonance frequency of the vibration order after the change of the environmental influence, and
6. correlation of the extent of the environmental influence (15) with the resonance frequency difference.

17. Method according to claim 16, **characterized in that** also harmonics are generated and measured in the piezoelectric material, which harmonics are also taken into account in detecting the type or extent of the environmental influence (15).

18. Method according to one of the claims 16 or 17, **characterized in that** the resonance frequencies of the harmonics serve as a temperature compensation of the vibration behaviour of the piezoelectric material.

19. Method according to one of the claims 17 to 18, **characterized in that** the exertion of an environmental influence (15) comprises the irradiation of the sensor layer (3) with an energetic radiation.

20. Method according to one of the claims 16 to 19, **characterized** that the environmental influence (15) is the action of a chemical or biological substance onto the sensor layer (3), or a temperature change.

21. Method according to one of the claims 16 to 20, **characterized in that** periodically running signals, in particular rectangular, sinusoidal or triangular signals, are conveyed to the piezoelectric material by the excitation unit (13).

22. Device with a device according to claim 1 which forms a first sensor (5o), **characterized by** a second sensor (5u) for the detection of an environmental influence (15), wherein the second sensor (5u) has a first (7) and a second opposite excitation electrode (9), a piezoelectric material (11) arranged between these, and a sensor layer (3) which at least in sections covers but which does not pass over the second excitation electrode (9), and the sensor layer (3) is formed of an oxide ceramic, non oxide ceramic, or semiconductor material, wherein the sensor layer (3) is arranged such that the piezoelectric material (11) is exclusively excitable to vibrations by the excitation electrodes (7, 9), and the resonance frequency of a vibration order of the piezoelectric material is detectable by a frequency measurement device (17).

23. Device according to the claim 22, **characterized in that** the piezoelectric material (11) of the first sensor (5o) is identical to that of the second sensor (5u).

24. Device according to the claim 22 or 23, **characterized in that** the materials constituting the excitation electrodes of the first and second sensors (50, 5u) are identical.

25. Device according to one of the claims 22 to 24, **characterized in that** the material constituting the sensor layer (3) of the first sensor (5o) is identical to the second material constituting the sensor layer (3) of the second sensor (5u).

26. Device according to one of the claims 22 to 25, **characterized in that** the geometry in which the sensor layer (3) of the first sensor (5o) is formed identical to the geometry in which the sensor layer (3) of the second sensor (5u) is formed.

27. Device according to one of claims 1 to 12, wherein the first excitation electrode (7) is arranged on a first side of the piezoelectric material (11) and the second excitation electrode (9) on the opposite second side of the piezoelectric material (11), and on the first side the sensor layer (3) with a first partial surface (A1) lies against the first excitation electrode (7) and with a second partial surface (A2) against the piezoelectric material (11),
such that the piezoelectric material (11) is excitable to vibrations by electric potentials from an excitation unit for generating electric potentials (13) through both the excitation electrodes (7, 9) and the sensor layer (3), and the resonance frequency of a vibration order of the piezoelectric material is detectable by a frequency measurement device (17), wherein
on the second side of the piezoelectric material a third excitation electrode (27) is arranged, which lies against the piezoelectric material (11) with a surface (A3) which is at least as large as the partial surface (A2) of the sensor layer (3) and in a projection of this partial surface (A2) onto the surface (A3), the partial surface (A2) is completely covered by the surface (A3), and the first (7), the second (9) and the third excitation electrodes (27) can be electrically connected with a switching means (29) which in a first switching position can connect electroconductively the second (9) and the third excitation electrode (27) such that the conductivity of the sensor layer (3) is detectible, and the switching means (29) in a second switching position can connect electroconductively the first (7) and the third excitation electrode (27) such that the change of the vibration properties by the adsorption or deposit of a substance of the environmental influence is measurable.

28. Device according to claim 27, **characterized in that** the first excitation electrode (7) is formed in the form of a circular disc on one side of the piezoelectric material.

29. Device according to claim 27 or 28, **characterized in that** the second excitation electrode (9) is formed in the form of a circular disc and **in that** the third excitation electrode (27) is formed in the form of a circular ring (31).

30. Device according to claim 27, **characterized in that** the sensor layer (3) directly lies against the first excitation electrode and is formed circularly.

31. Device according to one of claims 27 to 30, **characterized in that** the piezoelectric material is formed in the form of a cylinder (19), wherein the first, the second and the third excitation electrode (27) as well as the piezoelectric material have a common axis of symmetry.

## Revendications

1. Dispositif permettant de détecter une influence environnementale (15) sur un capteur (5) en détectant une variation d'une conductivité électrique d'une couche de capteur (3) du capteur (5), moyennant quoi le capteur (5) présente une première (7) et deuxième (9) électrodes d'excitation, un matériau piézo-électrique (11) disposé entre la première (7) et la deuxième (9) électrodes d'excitation, et une couche de capteur (3), qui repose au moins par section aussi bien sur la première électrode d'excitation (7) que sur le matériau piézo-électrique (11), et une unité d'excitation permettant de produire des potentiels électriques (13), qui peuvent être délivrés au matériau piézo-électrique par l'intermédiaire de la première (7) et de la deuxième électrodes d'excitation, de telle sorte que le matériau piézo-électrique (11) peut être excité par les électrodes d'excitation (7, 9) et la couche de capteur (3) afin d'obtenir des oscillations, ainsi qu'un dispositif mesureur de fréquence (17),
**caractérisé en ce que** la couche de capteur (3) est réalisée dans un matériau de céramique oxydée, de céramique non oxydée ou semi-conducteur, dont la variation de conductivité fait varier la surface d'électrode active sur une zone de la couche de capteur, moyennant quoi le matériau piézo-électrique (11) peut être excité par la surface d'électrode active afin d'obtenir des oscillations, et
**en ce que**, à l'aide de dispositif mesureur de fréquence (17), la fréquence de résonance d'un ordre d'oscillation du matériau piézo-électrique (11) peut être détectée.

2. Dispositif selon la revendication 1, permettant de détecter une influence environnementale, **caractérisé en ce que** l'unité d'excitation (13) est formée par un circuit oscillant ou un catalyseur réseau.

3. Dispositif selon la revendication 1 ou 2, **caractérisé en ce que** l'électrode d'excitation est réalisée en métal, en céramique non oxydée, en céramique oxydée ou dans un métal noble.

4. Dispositif selon l'une quelconque des revendications précédentes, **caractérisé en ce que** l'électrode d'excitation repose directement sur le matériau piézo-électrique.

5. Dispositif selon l'une quelconque des revendications précédentes, **caractérisé en ce que** la première électrode d'excitation (7) repose avec une surface sur le matériau piézo-électrique, qui est aussi grande que la surface avec laquelle la deuxième électrode d'excitation (9) repose sur le matériau piézo-électrique.

6. Dispositif selon l'une quelconque des revendications précédentes, **caractérisé en ce que** la première électrode d'excitation (7) repose avec une surface sur le matériau piézo-électrique, qui est plus grande ou plus petite que la surface avec laquelle la deuxième électrode d'excitation (9) repose sur le matériau piézo-électrique.

7. Dispositif selon l'une quelconque des revendications précédentes, **caractérisé en ce que** la ou les électrodes d'excitation reposent avec une surface circulaire sur le matériau piézo-électrique.

8. Dispositif selon l'une quelconque des revendications précédentes, **caractérisé en ce que** la première électrode d'excitation (7) présente une géométrie identique à celle de la deuxième électrode d'excitation (9).

9. Dispositif selon l'une quelconque des revendications précédentes, **caractérisé en ce que** le matériau piézo-électrique est formé par un quartz, de la langasite, ses composés isomorphes ou de l'orthophosphate de gallium, ou est un matériau piézo-électrique qui est fonctionnel à des températures allant jusqu'à 1 000 °C.

10. Dispositif selon l'une quelconque des revendications précédentes, **caractérisé en ce que** le matériau piézo-électrique présente la forme fondamentale d'un cylindre.

11. Dispositif selon l'une quelconque des revendications précédentes, **caractérisé en ce que** la couche de capteur (3) repose directement sur l'électrode d'excitation et/ou le matériau piézo-électrique.

12. Dispositif selon l'une quelconque des revendications précédentes, **caractérisé en ce que** la couche de capteur (3) est configurée sous forme circulaire.

13. Dispositif selon l'une quelconque des revendications précédentes, **caractérisé en ce que** le matériau de céramique oxydée, de céramique non oxydée ou semi-conducteur contient du ZnO, ZnS, TiO₂, Se, CeO₂ et des oxydes de métaux de transition.

14. Dispositif selon l'une quelconque des revendications précédentes, **caractérisé en ce qu'**il comporte, comme dispositif mesureur de fréquence (17), un compteur de fréquence.

15. Dispositif selon l'une quelconque des revendications précédentes, **caractérisé en ce que**, à l'aide du dispositif mesureur de fréquence (17), on peut détecter le premier, le troisième, le cinquième ordre d'oscillation ou un ordre d'oscillation supérieur.

16. Dispositif permettant de détecter une influence environnementale (15) sur un capteur (5), qui présente une première (7) et une deuxième (9) électrode d'excitation, un matériau piézo-électrique (11) disposé entre la première (7) et deuxième (9) électrodes d'excitation et une couche de capteur (3), qui repose au moins par section aussi bien sur la première électrode d'excitation (7) que sur le matériau piézo-électrique (11), **caractérisé en ce que** la couche de capteur (3) est réalisée dans un matériau de céramique oxydée, de céramique non oxydée ou semi-conducteur, dont la variation de conductivité modifie la surface d'électrode active autour de la zone de la couche de capteur grâce à laquelle le matériau piézo-électrique (11) peut être excité afin d'obtenir des oscillations, qui comporte les étapes suivantes :
1. production d'un son fondamental dans le matériau piézo-électrique (11),
2. mesure de la fréquence de résonance de l'ordre d'oscillation de l'étape 1,
3. exercice d'une influence environnementale (15) sur la couche de capteur (3), grâce à laquelle la conductivité de la couche de capteur (3) est modifiée, et la variation de conductivité de la couche de capteur (3) modifie la surface d'électrodes actives de la première électrode d'excitation (7),
4. mesure de l'ordre d'oscillation une fois qu'on a exercé l'influence environnementale,
5. calcul d'une différence de fréquence de résonance qui est obtenue d'après la différence entre la fréquence de résonance de l'ordre d'oscillation de l'étape 1 et la fréquence de résonance de l'ordre d'oscillation après avoir modifié l'influence environnementale, et
6. corrélation du degré de l'influence environnementale (15) avec la différence de fréquence de résonance.

17. Procédé selon la revendication 16, **caractérisé en ce qu'**on produit et mesure également des sons supérieurs dans le matériau piézo-électrique, lesquels sont également pris en considération lors de la détection du type ou du degré de l'influence environnementale (15).

18. Procédé selon la revendication 16 ou 17, **caractérisé en ce que** les fréquences de résonance des sons supérieurs servent à établir une compensation de température du comportement d'oscillation du matériau piézo-électrique.

19. Procédé selon la revendication 17 ou 18, **caractérisé en ce que** l'exercice d'une influence environnementale (15) comporte l'irradiation de la couche de capteur (3) avec un rayonnement riche en énergie.

20. Procédé selon l'une quelconque des revendications 16 à 19, **caractérisé en ce que** l'influence environnementale (15) est l'influence d'une substance chimique ou biologique sur la couche de capteur (3), ou une variation de température.

21. Procédé selon l'une quelconque des revendications 16 à 20, **caractérisé en ce que**, grâce à l'unité d'excitation (13), on délivre des signaux périodiques, en particulier des signaux rectangulaires, sinusoïdaux ou triangulaires au matériau piézo-électrique.

22. Dispositif comportant un dispositif selon la revendication 1, qui forme un premier capteur (5o), **caractérisé** sur un deuxième capteur (5u) permettant de détecter une influence environnementale (15),
moyennant quoi le deuxième capteur (5u) présente une première (7) et une deuxième (9) électrodes d'excitation opposées, un matériau piézo-électrique (11) disposé entre celles-ci et une couche de capteur (3), qui recouvre au moins par section la deuxième électrode d'excitation (9), mais ne la dépasse pas, et la couche de capteur (3) est réalisée dans un matériau de céramique oxydée, de céramique non oxydée ou semi-conducteur, moyennant quoi la couche de capteur (3) est disposée de telle sorte que le matériau piézo-électrique (11) peut être excité exclusivement par les électrodes d'excitation (7, 9) afin d'obtenir des oscillations, et la fréquence de résonance d'un ordre d'oscillation du matériau piézo-électrique peut être détectée par un dispositif mesureur de fréquence (17).

23. Dispositif selon la revendication 22, **caractérisé en ce que** le matériau piézo-électrique (11) du premier capteur (50) est identique à celui du deuxième capteur (5u).

24. Dispositif selon la revendication 22 ou 23, **caractérisé en ce que** les matériaux dans lesquels sont réalisées les électrodes d'excitation du premier et deuxième capteurs (50, 5u) sont identiques.

25. Dispositif selon l'une quelconque des revendications 22 à 24, **caractérisé en ce que** le matériau dans lequel est réalisée la couche de capteur (3) du premier capteur (5o) est identique au deuxième matériau à partir duquel est réalisée la couche de capteur (3) du deuxième capteur (5u).

26. Dispositif selon l'une quelconque des revendications 22 à 25, **caractérisé en ce que** la géométrie selon laquelle la couche de capteur (3) du premier capteur (5o) est formée est identique à la géométrie selon laquelle la couche de capteur (3) du deuxième capteur (5u) est formée.

27. Dispositif selon l'une quelconque des revendications 1 à 2, dans lequel la première électrode d'excitation (7) est disposée sur une première face du matériau piézo-électrique (11) et la deuxième électrode d'excitation (9) est disposée sur la deuxième face opposée du matériau piézo-électrique (11), et sur la première face, la couche de capteur (3) repose avec une première surface partielle (A1) sur la première électrode d'excitation et avec une deuxième surface partielle (A2) sur le matériau piézo-électrique (11),
de telle sorte que le matériau piézo-électrique (11) peut être excité par les potentiels électriques d'une unité d'excitation qui permet de produire des potentiels électriques (13) et par l'intermédiaire des électrodes d'excitation (7, 9) ainsi que de la couche de capteur (3) pour obtenir des oscillations, et la fréquence de résonance d'un ordre d'oscillation du matériau piézo-électrique (11) peut être détectée par un dispositif mesureur de fréquence, moyennant quoi,
sur la deuxième face du matériau piézo-électrique est disposée une troisième électrode d'excitation (27), qui repose avec une surface (A3) sur le matériau piézo-électrique (11), qui est au moins aussi grande que la surface partielle (A2) de la couche de capteur (3) et, dans le cadre d'une projection de cette surface partielle (A2) sur la surface (A3), la surface partielle (A2) est complètement recouverte par la surface (A3), et les première (7), deuxième (9) et troisième électrodes d'excitation (27) peuvent être reliées électriquement à l'aide d'un moyen de connexion (29), qui peut relier de manière électroconductrice la deuxième (9) et la troisième électrodes d'excitation (27) dans un premier état de connexion, de telle sorte que la conductivité de la couche de capteur (3) peut être détectée, et le moyen de connexion (29) peut relier de manière électroconductrice la première (7) et la troisième électrode d'excitation (27) dans un deuxième état de connexion, de telle sorte que la variation des propriétés d'oscillation peut être mesurée par un dépôt ou un enlèvement de la substance de l'influence environnementale.

28. Dispositif selon la revendication 27, **caractérisé en ce que** la première électrode d'excitation (7) est formée sous la forme d'un disque circulaire sur une première face du matériau piézo-électrique.

29. Dispositif selon la revendication 27 ou 28, **caractérisé en ce que** la deuxième électrode d'excitation (9) se présente sous la forme d'un disque circulaire, et la troisième électrode d'excitation (27) se présente sous la forme d'une bague circulaire (31).

30. Dispositif selon la revendication 27, **caractérisé en ce que** la couche de capteur (3) repose directement sur la première électrode d'excitation et est circulaire.

31. Dispositif selon l'une quelconque des revendications 27 à 30, **caractérisé en ce que** le matériau piézo-électrique se présente sous la forme d'un cylindre (19), moyennant quoi la première, deuxième et troisième électrodes d'excitation (27) ainsi que le matériau piézo-électrique présentent un axe de symétrie commun.
